# EUROPEAN PATENT SPECIFICATION

(11) **EP 1 992 587 B1**
(45) Date of publication and mention of the grant of the patent: **07.07.2010**
(21) Application number: 08007783.7
(22) Date of filing: 22.04.2008
(51) Int. Cl.: B67C 7/00, B65G 47/84

(54) **An apparatus and method for continuously moving flexible containers from a rotary machine to a conveyor**
Vorrichtung und Verfahren zur kontinuierlichen Bewegung von Behältern aus einer Drehmaschine auf ein Förderband
Appareil et procédé de déplacement continu flexible de récipients d'une machine rotative vers un convoyeur

(30) Priority: 18.05.2007 IT PR20070037
(43) Date of publication of application: 19.11.2008
(73) Proprietor: Wild Parma S.r.l., 43044 Collecchio (PR) (IT)
(72) Inventor: Furlotti, Filippo, 43029 Traversetolo (Parma) (IT); Le Brun, Renato, 43100 Parma (IT)
(74) Representative: Grünecker, Kinkeldey, Stockmair & Schwanhäusser Anwaltssozietät

(56) References cited:
- EP-A- 1 041 034
- FR-A- 2 494 237
- GB-A- 220 169
- US-A- 3 837 141

## Description

The present invention relates to an apparatus and a method for continuously moving flexible containers from a rotary machine to a conveyor, which is preferably a linear belt conveyor.

A typical example of such a device is described in EP-A-1 041 034 which discloses the preamble of claims 1 and 8; other devices are disclosed in FR 2594237, US 3037241, and GB 220 168.

The flexible containers are provided with spout and collar, and are normally moved hanging by said collar in the rotary machines.

However, the problem arises of a suitable treatment of the containers exiting the rotary machines when the containers need to be transferred to types of machine or apparatuses that do no handle objects gripped by the collar.

In the prior art, there are no solutions for example to transfer containers from a capper to a linear belt conveyor that conveys the container towards an area for their packaging.

An additional problem is given by the fact that the release of flexible containers on a moving conveyor belt, if it occurs from a distance (height) of about 50 mm from the conveyor causes the bouncing of the containers, which assume such positions on the conveyor belt as not to allow their easy automatic handling downstream in the packaging station.

It is therefore necessary for the placement on the belt to occur from a lower height, but thereby the means that release the containers on the belt interfere with the containers released on the belt and hence it is necessary to solve this problem.

An object of the present invention is to eliminate the aforesaid problems making available a method and an apparatus for continuously moving flexible containers from a rotary machine to a conveyor in which the containers can assume correct positions on the conveyor without interfering with the means that deposited them thereon.

Said objects are fully achieved by the apparatus and by the method of the present invention, which are characterised by the content of the appended claims and in particular in that the apparatus comprises in combination:
- a rotary structure provided peripherally with a plurality of pincers so shaped as to draw individual flexible containers from the rotary machine in the vertical position and then release them in the horizontal position on the conveyor;
- means for rotating the pincers by 90° from a position in which the jaws operate on a horizontal plane to a position in which they operate on a vertical plane and vice versa.

The method comprises the steps of:
- drawing individual containers in the vertical position from the rotary machine;
- rotating the containers from the vertical position to a horizontal position, when transferring the containers to the conveyor;
- releasing the containers by free fall on the conveyor with simultaneous movement of the pincers in a region of non interference with the containers transferred on the conveyor.

These and other characteristics shall become more readily apparent from the following description of a preferred embodiment, illustrated purely by way of non limiting example in the accompanying drawing tables, in which:

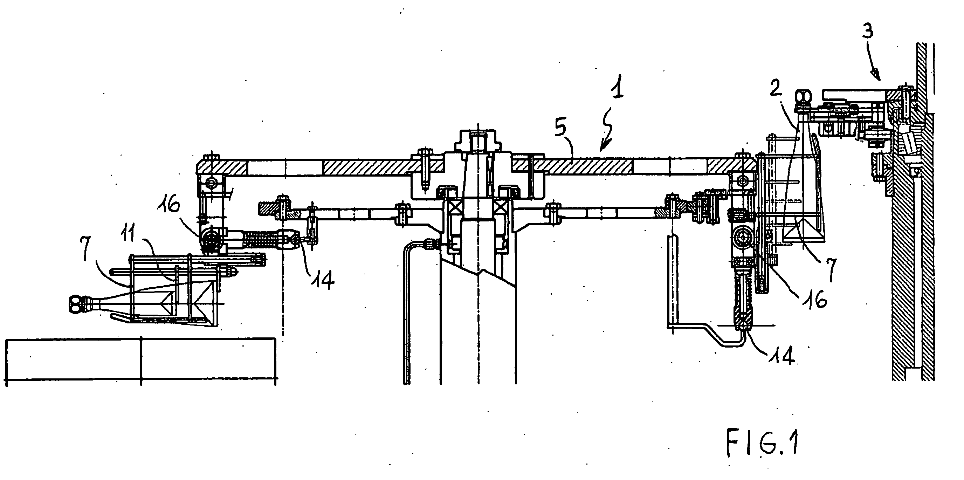

- figure 1 shows the apparatus in a partially sectioned frontal view;

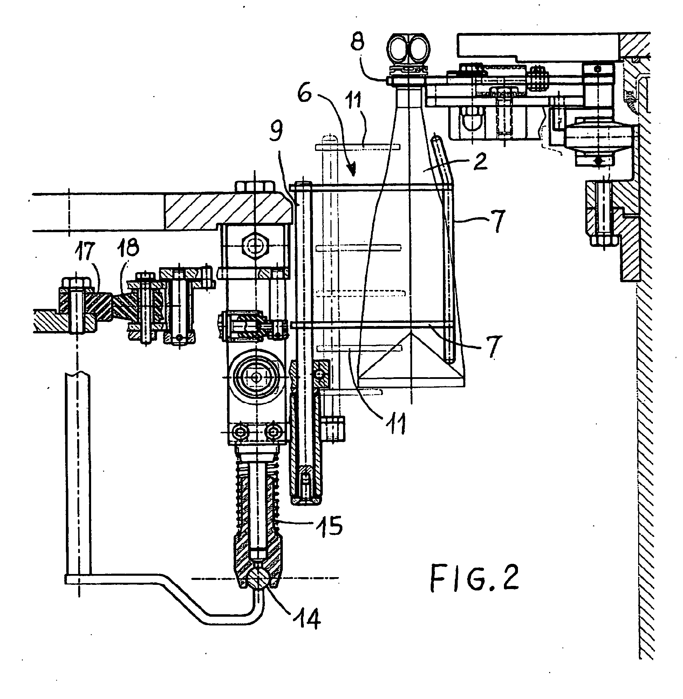

- figures 2 and 3 illustrate details of figure 1;

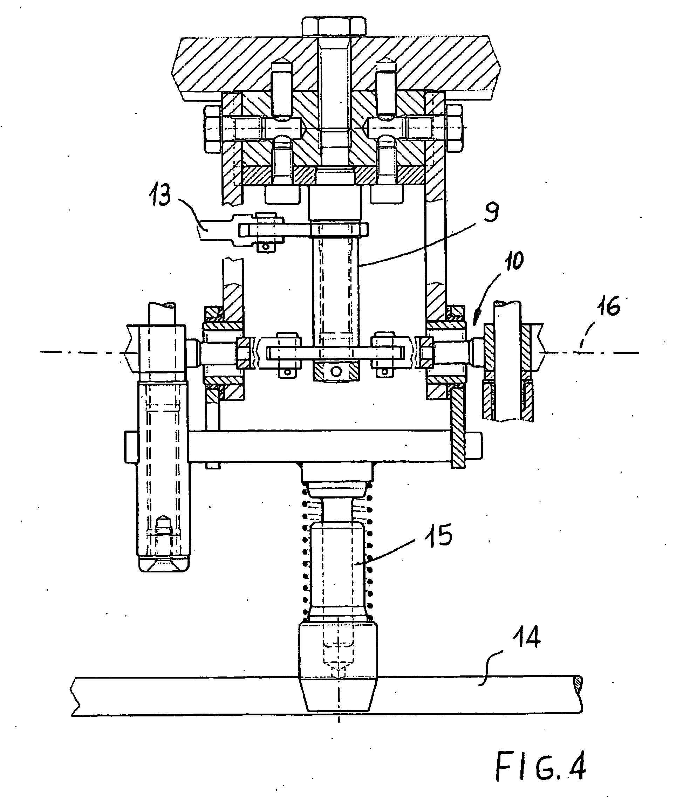

- figure 4 shows a detail of the apparatus, in a front view without the pincers;

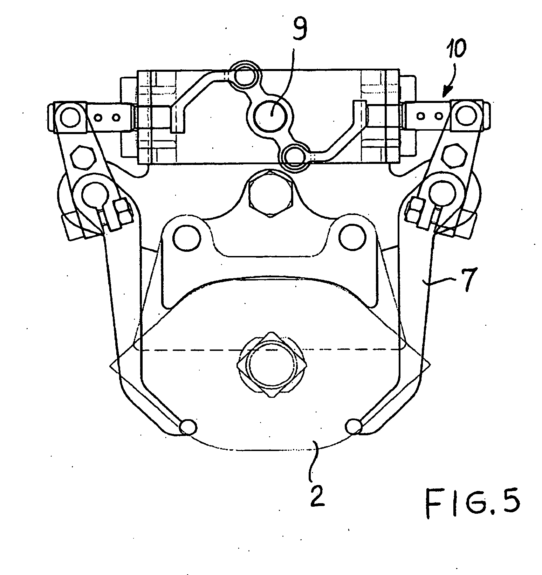

- figures 5 and 6 show the pincers, respectively in closed position (retaining the container) and open position (releasing the container).

With reference to the figures, the number 1 indicates in its entirety an apparatus for transferring flexible containers 2 from a rotary machine 3 (in the specific case, a capper) to a conveyor 4 (in the specific case, a linear conveyor belt).

The containers 2 are flexible containers shaped as envelopes, provided with spout and commonly called "pouches".

These containers are normally manipulated and moved at the spout, more specifically at a collar 8 of the spout, according to the prior art.

The apparatus 1 is a rotary apparatus comprising a rotating structure constituted by a platform 5 on whose periphery is present a plurality of pincers 6 whose jaws 7 are so shaped as to grip the containers at their body and not at their collar 8.

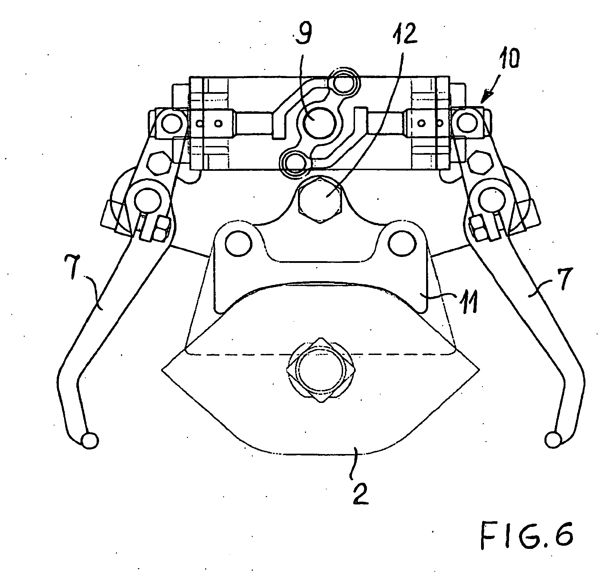

The pincers reach the region where the containers are to be withdrawn from the capper with jaws open, as shown in figure 6.

A cam 17 operates during the rotation on a wheel 18 which actuates a transmission 13 whereto it is connected by means of rotoidal pair and consequently a shaft 9 for actuating the jaws is set in rotation, causing the activation of a lever mechanism 10 that serves to open/close the jaws 7.

The jaws 7, moving on a horizontal plane, therefore close on the vertical body of the container, allowing its grip.

A pad 11 facilitates the retaining of the container in the correct position.

The pads 11 are easily interchangeable (acting on a screw 12) in case of a change in the format of the containers to be treated.

Once the container is gripped by the pincers 6 and thence it moves from the capper to the present apparatus, the pincers undergo a 90° rotation during the arc travelled towards the conveyor 4, whereupon the containers are lastly retained between the jaws 7 in horizontal lying position.

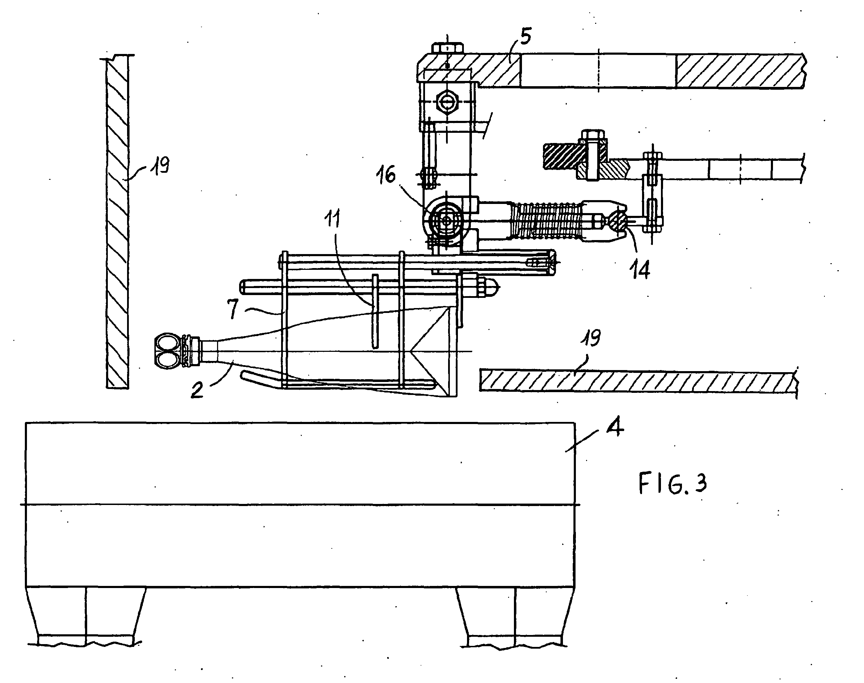

The rotation of the pincers is produced, for example in the manner of what takes place in the sector of rotary rinsing machines, by means of a cam constituted by a rod 14 (that develops all around the apparatus) whereon an element 15 is engaged rotatably and slidably to cause a rotation of the pincers around an axis 16 until reaching the position shown in figure 3 with horizontal container.

The rod 14 with the element 15 and the axis 16 constitute means for rotating the pincers by 90° from a position in which the jaws 7 operate on a horizontal plane to a position in which they operate on a vertical plane and vice versa.

The pincers retain the container at a distance from the conveyor belt 4 that is considerably less than 50 mm, to prevent the container from bouncing on the belt as a result of its release by free fall.

Said distance, less than 20 mm, is preferably 15 mm.

However, the release distance, markedly and originally reduced with respect to the prior art, makes it necessary to provide for a correct positioning of the pincers after release to prevent the container that advances on the conveyor after being released by the pincers from impacting against the pincers, in particular against the downstream jaw, if they are still present in place.

The present invention then provides for the pincers, as soon as the container is released, to be removed from the possible interference by means of 90° rotation in the opposite direction around the axis 16, i.e. returning to the initial position of gripping the container from the capper.

In particular, this second rotation from the horizontal position to the vertical position is carried out, to avoid interference between the jaws 7 and the container, in open position (see FIG.6). The opening of the jaws 7 and the rotation around the axis 16 are simultaneous rotations on orthogonal axes. Such movements are possible because the lever mechanism 10 operates in the centre of rotation of the axis 16.

All is commanded by the rod 14.

With reference to figure 3, the particular arrangement of the conveyor 4 and of the platform 5 make the device suitable and innovative with respect to aseptic technology. The platform 5 which through the jaws 7 moves the container in a sterile area always remains in the sterile area and the conveyor 4 that receives the container always remains in non sterile area, avoiding a contaminating effect. The device allows the sharp separation between the two areas, only the container as a result of the fall of about 20 mm moves from the sterile area to the non sterile area, delimited by the baffles 19.

## Claims

1. An apparatus for continuously roving flexible containers from a rotary machine (3) to a conveyor (4), **characterised in that** it comprises in combination:
- a rotary structure (5) provided peripherally with a plurality of pincers (6) with jaws (7) so shaped as to draw individual flexible containers (2) from the rotary machine (3) in the vertical position and then release them in the horizontal position on the conveyor (4);
- means (14, 15, 16) for rotating the pincers by 90° from a position in which the jaws (7) operate on a horizontal plane to a position in which they operate on a vertical plane and vice versa.

2. An apparatus as claimed in claim 1, wherein the pincers (6) operate on the body of the containers (2).

3. An apparatus as claimed in claim 1, wherein the containers (2) are released by free fall on the conveyor from a distance of less than 20 mm.

4. An apparatus as claimed in claim 1, wherein is provided a pad (11) that is interchangeable in case of format change of the container (2) to be treated.

5. An apparatus as claimed in claim 1, wherein the means for rotating the pincers by 90° comprise a rod (14) that develops around the apparatus and whereto is rotatably and slidably associated an element (15) for interconnection with an axis (16) of rotation of the pincer (6).

6. An apparatus as claimed in claim 1, wherein are provided means for opening and closing the jaws (7) comprising an actuation cam (17), whereon slides a wheel (18) connected to a transmission (13) that operates the rotation of a shaft (9) and the subsequent activation of a lever mechanism (10).

7. An apparatus as claimed in claim 6, wherein the lever mechanism (10) operates in the centre of rotation (16) of the pincers (6).

8. A method for continuously moving flexible containers from a rotary machine (3) to a conveyor (4), **characterised in that** it comprises the following steps:
- drawing individual containers (2) in the vertical position from the rotary machine (3) by means of pincers (6);
- rotating the containers (2) from the vertical position to a horizontal position, when transferring the containers to the conveyor (4);
- releasing the containers (2) by free fall on the conveyor (4) with simultaneous movement of the pincers (6) in a region of non interference with the containers transferred on the conveyor.

9. A method as claimed in claim 8, wherein the pincers (6) rotate by 90° from a position in which the jaws (7) operate on a horizontal plane to a position in which they operate on a vertical plane and vice versa.

10. A method as claimed in claim 8, wherein the release by free fall takes place from a distance of less than 20 mm between container (2) and conveyor (4).

## Patentansprüche

1. Vorrichtung zum kontinuierlichen Bewegen flexibler Behälter von einer Rotationsmaschine (3) zu einer Fördereinrichtung (4), **dadurch gekennzeichnet, dass** sie in Kombination umfasst:
- eine Drehstruktur (5), die am Umfang mit einer Vielzahl von Zangen (6) mit Backen (7) versehen ist, die so geformt sind, dass sie einzelne flexible Behälter (2) von der Rotationsmaschine (3) in der vertikalen Position abziehen und sie dann in der horizontalen Position auf der Fördereinrichtung (4) freigeben;
- eine Einrichtung (14, 15, 16) zum Drehen der Zangen um 90° von einer Position, in der die Backen (7) in einer horizontalen Ebene arbeiten, an eine Position, in der sie in einer vertikalen Ebene arbeiten, und umgekehrt.

2. Vorrichtung nach Anspruch 1, wobei die Zangen (6) auf den Körper der Behälter (2) einwirken.

3. Vorrichtung nach Anspruch 1, wobei die Behälter (2) durch freien Fall auf die Fördereinrichtung aus einem Abstand von weniger als 20 mm freigegeben werden.

4. Vorrichtung nach Anspruch 1, wobei ein Schuh (11) vorhanden ist, der im Falle einer Änderung des Formats der zu bearbeitenden Behälter (2) ausgewechselt werden kann.

5. Vorrichtung nach Anspruch 1, wobei die Einrichtung zum Drehen der Zangen um 90° eine Stange (14) umfasst, die um die Vorrichtung herum verläuft, und mit der ein Element (15) zur Verbindung mit einer Drehachse (16) der Zangen (6) drehbar und verschiebbar verbunden ist.

6. Vorrichtung nach Anspruch 1, wobei eine Einrichtung zum Öffnen und Schließen der Backen (7) vorhanden ist, die einen Betätigungsnocken (17) umfasst, auf dem ein Rad (18) gleitet, das mit einem Getriebe (13) verbunden ist, das die Drehung einer Welle (9) und die anschließende Aktivierung eines Hebelmechanismus (10) bewirkt.

7. Vorrichtung nach Anspruch 6, wobei der Hebelmechanismus (10) am Drehmittelpunkt (16) der Zange (6) arbeitet.

8. Verfahren zum kontinuierlichen Bewegen flexibler Behälter von einer Rotationsmaschine (3) zu einer Fördereinrichtung (4), **dadurch gekennzeichnet, dass** sie die folgenden Schritte umfasst:
- Ziehen einzelner Behälter (2) in der vertikalen Position von der Rotationsmaschine (3) mittels Zangen (6);
- Drehen der Behälter (2) von der vertikalen Position an eine horizontale Position beim Überführen der Behälter zu der Fördereinrichtung (4);
- Freigeben der Behälter (2) durch freien Fall auf die Fördereinrichtung (4) bei gleichzeitiger Bewegung der Zangen (6) in einem Bereich, in dem die auf die Fördereinrichtung überführten Behälter nicht behindert werden.

9. Verfahren nach Anspruch 8, wobei sich die Zangen (6) um 90° von einer Position, in der die Backen (7) in einer horizontalen Ebene arbeiten, an eine Position drehen, in der sie in einer vertikalen Ebene arbeiten, und umgekehrt.

10. Verfahren nach Anspruch 8, wobei das Freigeben durch freien Fall aus einem Abstand von weniger als 20 mm zwischen Behälter (2) und Fördereinrichtung (4) stattfindet.

## Revendications

1. Appareil pour déplacer de manière continue des récipients souples d'une machine rotative (3) à un convoyeur (4), **caractérisé en ce qu'**il comprend en combinaison :
une structure rotative (5) prévue de manière périphérique avec une pluralité de pinces (6) avec des mâchoires (7) formées afin de retirer des récipients souples (2) individuels de la machine rotative (3) dans la position verticale et ensuite les libérer dans la position horizontale sur le convoyeur (4) ;
des moyens (14, 15, 16) pour faire tourner les pinces de 90° à partir d'une position dans laquelle les mâchoires (7) fonctionnent sur un plan horizontal jusqu'à une position dans laquelle elles fonctionnent sur un plan vertical et vice versa.

2. Appareil selon la revendication 1, dans lequel les pinces (6) fonctionnent sur le corps des récipients (2).

3. Appareil selon la revendication 1, dans lequel les récipients (2) sont libérés en chute libre sur le convoyeur d'une distance inférieure à 20 mm.

4. Appareil selon la revendication 1, dans lequel on prévoit un patin (11) qui est interchangeable en cas de changement de format des récipients (2) à traiter.

5. Appareil selon la revendication 1, dans lequel les moyens pour faire tourner les pinces de 90° comprennent une tige (14) qui se développe autour de l'appareil et où elle est associée de manière rotative et coulissante à un élément (15) pour l'interconnexion avec un axe (16) de rotation de la pince (6).

6. Appareil selon la revendication 1, dans lequel on prévoit des moyens pour ouvrir et fermer les mâchoires (7) comprenant une came d'actionnement (17), sur laquelle coulisse une roue (18) raccordée à une transmission (13) qui actionne la rotation d'un arbre (9) et l'activation successive d'un mécanisme de levier (10).

7. Appareil selon la revendication 6, dans lequel le mécanisme de levier (10) fonctionne dans le centre de rotation (16) des pinces (6).

8. Procédé pour déplacer de manière continue des récipients souples d'une machine rotative (3) à un convoyeur (4), **caractérisé en ce qu'**il comprend les étapes suivantes consistant à :
retirer les récipients (2) individuels dans la position verticale de la machine rotative (3) au moyen de pinces (6) ;
faire tourner les récipients (2) de la position verticale à une position horizontale, lorsque l'on transfère les récipients sur le convoyeur (4) ;
libérer les récipients (2) par chute libre sur le convoyeur (4) avec un mouvement simultané des pinces (6) dans une région de non interférence avec les récipients transférés sur le convoyeur.

9. Procédé selon la revendication 8, dans lequel les pinces (6) tournent de 90° d'une position dans laquelle les mâchoires (7) fonctionnent sur un plan horizontal à une position dans laquelle elles fonctionnent sur un plan vertical et vice versa.

10. Procédé selon la revendication 8, dans lequel la libération par chute libre a lieu d'une distance inférieure à 20 mm entre le récipient (2) et le convoyeur (4).
